# EUROPEAN PATENT APPLICATION

(11) **EP 1 241 882 A2**
(43) Date of publication of application: **18.09.2002**
(21) Application number: 02005280.9
(22) Date of filing: 11.03.2002
(51) Int. Cl.: H04N 5/913

(54) **Duplication controlling method, duplication controlling apparatus, recording medium, and program embodied on computer-readable medium**

(30) Priority: 12.03.2001 JP 2001068260
(71) Applicant: Pioneer Corporation, Tokyo-to (JP)
(72) Inventor: Kuroda, Kazuo, c/o Pioneer Corp., Tokorozawa Works, Tokorozawa-shi, Saitama-ken (JP)
(74) Representative: Reinhard - Skuhra - Weise & Partner

(57) **Abstract**

The present invention is directed to a duplication controlling method for controlling duplication by inserting duplication-related control information (1,2) into contents comprising digital information. The contents are delivered together with a table containing the change positions of the control information for a predetermined range of the contents and the contents of the control information which varies at each change position.

## Description

The present invention relates to an electronic watermark embedding method and the like for embedding an electronic watermark to control the duplication of digital information contents.

Nowadays, digital television broadcast has been realized, so that the delivery of an image through an image digital signal is widely being performed. Moreover, there is being spread also a video recorder for recording an image as digital data onto an optical disc and a magnetic tape. If an image can be recorded as the digital data, it is possible to duplicate an image without deteriorating the quality of the image. Accordingly, from the viewpoint of copyright, it is necessary to limit the duplication of the image.

However, currently used duplication controlling information in DVD is recorded in a plain form in a sector ID region and can easily be altered. For this, there has been developed a technique to embed an electronic watermark into the contents.

For example, European Patent Application EP1006722A2 (corresponding to Japanese Patent Application Laid-open No. 2000-173175) discloses a watermark (electronic watermark) technique as one of techniques to limit the duplication of the image by embedding information regarding the duplication limit in the digital image. The watermark is embedded so as to be hidden in the image. Accordingly, the watermark embedded in the image hardly lowers the image quality. Moreover, a person who has received the image having the watermark embedded probably cannot recognize that the watermark is present in the image, and accordingly, it becomes very difficult to remove the watermark from the image.

The aforementioned EP1006722A2 discloses a system using a watermark indicating the prohibition of the duplication and a watermark indicating the allowance of one-generation duplication. Such a system can control the number of times that the duplication is performed, and accordingly, the system does not cause a copyright problem. Further, a person who receives television broadcast can watch a delivered image and without being restricted to a broadcast time.

In this system, when a digital image is supplied to a video recorder, the video recorder checks whether the image has a watermark. If one is present and it indicates to prohibit the duplication, the video recorder does not record the image. Moreover, when no watermark is present or a watermark is present but it indicates the allowance of one-generation duplication, the video recorder decides that the image is allowed to be duplicated and records the image onto an optical disc.

When an image is broadcast from a broadcast station, normally, a plurality of image contents are continuously broadcast. Accordingly, a variety of image contents, each having different image duplication control information, i.e., duplication prohibition, one-generation duplication allowance, duplication allowance, are successively broadcast. For example, the image contents having duplication control information indicating the duplication prohibition may be followed by the image contents of having duplication control information indicating the duplication allowance.

However, check to determine whether a watermark is present and detection of the watermark type switching from one to another require a predetermined period of time (for example, a predetermined time not greater than 10 seconds). Therefore, the image contents switching may not be detected rapidly enough and at a head portion of the subsequent image contents, control information different from an actual one may be recognized.

For example, in a reception apparatus and a reproduction apparatus, there is caused a trouble of mismatching between control information based on a watermark and actual control information in a sector. This disturbs, for example, control of a micro vision signal as copy (duplication) control information to be added to an analog video signal. Moreover, a recording apparatus also has a problem. For example, even after the image contents are switched from those having control information of the duplication prohibition to those having control information of the duplication allowance, a head portion of the subsequent image contents is recognized as in the duplication prohibition and cannot be recorded. Moreover, even if the contents having control information of one-generation duplication allowance are switched to contents having control information of duplication allowance, a watermark of a duplicated state may be embedded to a head portion of the subsequent contents, and then the contents are scrambled. On the contrary, there is a trouble that a head portion of the contents whose duplication is prohibited is recorded.

### SUMMARY OF THE INVENTION

It is therefore an object of the present invention to provide a duplication controlling method that can solve the problems caused by a detection delay of control information.

The present invention provides a duplication controlling method in which duplication is controlled by inserting duplication-related control information into contents comprising digital information. In the method, a table is added to the contents. The table contains a change position of the control information for a predetermined range of the contents and the contents of the control information which vary at each change position.

According to this duplication controlling method, when reading the table, it is possible to recognize in advance the change position of the control information and the contents of the control information which vary at each change position. This makes it possible to surely keep up with a control information change caused when the contents are switched from one to another. The "predetermined range of the contents" may be, for example, all the contents contained in a package medium or the contents to be delivered for a predetermined period of time (a predetermined hour) when the contents are delivered by broadcasting or the like.

It should be noted that in this Specification "control information contents the change positions" is a concept including an end, a head, and a switching position of control information.

The table may be added into the contents periodically.

In this case, when the contents are delivered by broadcasting or the like, a reception side can fetch the table without fail, and hence, this makes it possible to surely keep up with a control information change.

The table may be added at a position to be reproduced prior to the reproduction of the contents.

When the contents are contained in a package medium, the table can be fetched without fail prior to the reproduction of the contents, and accordingly, this makes it possible to surely keep up with a control information change.

The table may be scrambled and recorded as sub-information of the contents, and a scramble release key may be embedded as an electronic watermark into the contents.

In the case that the table is scrambled and the scramble release key is contained in the electronic watermark, it is quite difficult to get the key in an unauthorized way and access the table. Accordingly, it is possible to effectively prevent the unauthorized alteration of the table.

The table may be embedded as an electronic watermark.

In this case, it becomes difficult to detect the existence of the table and the contents of the table. Accordingly, it is possible to effectively prevent the unauthorized alteration of the table.

The present invention provides a duplication controlling apparatus in which duplication is controlled by inserting duplication-related control information into contents comprising digital information. The duplication controlling apparatus is provided with: an adding device for adding a table to the contents. The table contains the change positions of the control information for a predetermined range of the contents and the contents of the control information which varies at each change position.

According to this duplication controlling apparatus, when reading the table, it is possible to recognize in advance the change positions of the control information and the contents of the control information which varies at each change position. This makes it possible to surely keep up with a control information change caused when the contents are switched from one to another. The "predetermined range of the contents" may be, for example, all the contents contained in a package medium or the contents to be delivered for a predetermined period of time (a predetermined hour) when the contents are delivered by broadcasting or the like.

The adding device may add the table periodically to the contents.

When the contents are delivered by broadcasting, a reception side can fetch the table without fail, and accordingly, this makes it possible to surely keep up with a control information change.

The table may be added at a position to be reproduced prior to the reproduction of the contents.

In this case, particularly when the contents are contained in a package medium, the table can be fetched without fail prior to the reproduction of the contents, and accordingly, this makes it possible to surely keep up with a control information change.

The table may be scrambled and recorded as sub-information of the contents, and a scramble release key may be embedded as an electronic watermark into the contents.

In this case, since the table is scrambled and the scramble release key is contained in the electronic watermark, it is quite difficult to get the key in an unauthorized way and access the table. Accordingly, it is possible to effectively prevent the unauthorized alteration of the table.

The table may be embedded as an electronic watermark.

In this case, it becomes difficult to detect the existence of the table and the contents of the table. Accordingly, it is possible to effectively prevent the unauthorized alteration of the table.

The present invention is characterized by providing a recording medium in which control information regarding the duplication of contents comprising digital information is recorded, and in the recording medium, there is recorded a table containing the change positions of the control information for a predetermined range of the contents and the contents of the control information which varies at each change position.

According to this recording medium, by reading the table, it is possible to recognize in advance the change positions of the control information and the contents of the control information which varies at each change position. This makes it possible to rapidly keep up with a control information change caused when contents are switched from one to another. The "predetermined range of the contents" may be, for example, all the contents contained in a package medium or the contents to be delivered for a predetermined period of time (a predetermined hour) when the contents are delivered by broadcasting or the like.

The table may be recorded into the contents periodically.

In this case, when the contents are delivered by broadcasting or the like, a reception side can fetch the table without fail, and hence, this makes it possible to surely keep up with a control information change.

The table may be recorded at a position to be reproduced prior to the reproduction of the contents.

In this case, particularly when the contents are contained in a package medium, the table can be fetched without fail prior to the reproduction of the contents, and hence, this makes it possible to surely keep up with a control information change.

The table may be scrambled and recorded as sub-information of the contents, and a scramble release key may be embedded as an electronic watermark into the contents.

In this case, since the table is scrambled and the scramble release key is contained in the electronic watermark, it is quite difficult to get the key in an unauthorized way and access the table. Accordingly, it is possible to effectively prevent the unauthorized alteration of the table.

The table may be embedded as an electronic watermark.

In this case, it becomes difficult to detect the existence of the table and the contents of the table. Therefore, it is possible to effectively prevent the unauthorized alteration of the table.

A duplication controlling apparatus of the present invention executes control in accordance with duplication-related control information embedded in contents comprising digital information, and the duplication controlling apparatus is provided with: a table reading device (104 and the like) for reading a table which contains the change positions of the control information for a predetermined range of the contents and the contents of the control information which changes at each change position; a change position detecting device (104 and the like) for detecting the change positions of the control information; and control means for modifying the process of the duplication controlling apparatus in accordance with the information fetched from the table by the table reading device (104 and the like) when the change positions are detected by the change position detecting device (104 and the like).

According to this duplication controlling apparatus, the table reading device can read the table, so as to recognize in advance the change positions of the control information and the contents of the control information which changes at each change position and accordingly, it is possible to rapidly keep up with a control information change caused when the contents are switched from one to another. The "predetermined range of the contents" may be, for example, all the contents contained.

The table reading device (104 and the like) may read the table which has been periodically recorded in the contents.

In this case, the table can be fetched irrespective of the part to be reproduced, and hence, this makes it possible to surely keep up with a control information change.

The table reading device (104 and the like) may read the table prior to the reproduction of the contents.

In this case, since the table can surely be fetched prior to the reproduction of the contents, it is possible to keep up with the control information change without fail.

The table reading device (104 and the like) may read a table which has been scrambled and recorded as sub-information of the contents, and the duplication controlling apparatus may be provided with an electronic watermark reading device which reads a release key for releasing the scramble of the table embedded in the contents and scramble release means for releasing the scramble of the table which has been read by the table reading means (104 and the like) in accordance with the release key which has been read by the electronic watermark reading device.

In this case, the table is scrambled and moreover, the release key for releasing the scramble is inserted into the electronic watermark. Accordingly, it is quite difficult to get the key in an unauthorized way and access the table. Thus, it is possible to effectively prevent the unauthorized alteration of the table.

The apparatus may be further provided with a reproduction device for reproducing the contents and signal overlap means for overlapping a duplication control signal over an analog reproduction signal which has been output from the reproduction means, and the control device may control the operation of the signal overlap device.

In this case, it is possible to rapidly keep up with a control information change caused when the contents are switched from one to another, thereby controlling the operation of the signal overlap means.

The apparatus may be further provided with a recording device for recording the contents, and the control device may control the recording operation of the recording device.

In this case, it is possible to rapidly keep up with a control information change caused when the contents are switched from one to another, thereby controlling the operation of the recording device.

The apparatus may be further provided with a reception device for receiving the contents, and a signal overlap device for overlapping a copy control signal over an analog reproduction signal which has been output from the reception device, and the control device may control the operation of the signal overlap device.

In this case, it is possible to rapidly keep up with a control information change caused when the contents are switched from one to another, thereby controlling the operation of the signal overlap device.

The present invention also provides a program embodied on computer-readable medium for executing the recording of duplication-related control information in contents comprising digital information in a recording medium. The program causes a computer to function as a creating device for creating a table containing the change positions of the control information to the contents recorded in the recording medium and the contents of the control information which vary at each change position; an adding device for adding the table into the contents; and a recording device for recording the table and the contents into the recording medium.

According to this invention, when reading the table, it is possible to recognize the change positions of the control information and contents of the control information which changes at each change position, thereby enabling a rapid response to each of the control information changes caused when the contents are switched from one to another. In the case that the contents are contained in a package medium, for example, the control information contained in the table may be for all of the contents contained and in the case that the contents are delivered by broadcasting, for example, the control information may be for a predetermined period of time (predetermined hours).

The table may be recorded at a position which is reproduced prior to the reproduction of the contents.

In this case, especially when the contents are contained in a package medium, the table can surely be fetched prior to the reproduction of the contents, and hence, this makes it possible to surely keep up with a control information change.

The table may be scrambled and recorded as sub-information of the contents, and an electronic watermark embedded in the contents may include a scramble release key.

In this case, the table is scrambled and the scramble release key is contained in the electronic watermark. Accordingly, it is quite difficult to get the key in an unauthorized way and access the table. Thus, it is possible to effectively prevent the unauthorized alteration of the table.

It should be noted that reference symbols used in attached drawings are added with parentheses to facilitate the understanding of the present invention, but the present invention is not to be limited to these drawings.

### BRIEF DESCRIPTION OF THE DRAWINGS

FIG. 1 is a diagram showing a data layout of an optical disc to which a duplication controlling method according to the present invention is applied;
FIG. 2A is a diagram showing the contents of a watermark to be embedded; FIG. 2B is a diagram showing a format of the watermark.
FIG. 3 is a block diagram showing configuration of an information recording/reproducing apparatus to/from an optical disc (DVD) using the duplication controlling method of the present invention;
FIG. 4 is a flowchart showing reproduction procedure in the information recording/reproducing apparatus;
FIG. 5 is a flowchart showing recording procedure in the information recording/reproducing apparatus;
FIG. 6 is a block diagram showing a configuration example of a transmission apparatus of a broadcast station; and
FIG. 7 is a block diagram showing a configuration example of a reception apparatus for receiving contents having an embedded watermark.

### DETAILED DESCRIPTION OF THE PREFERRED EMBODIMENTS

### [First Embodiment]

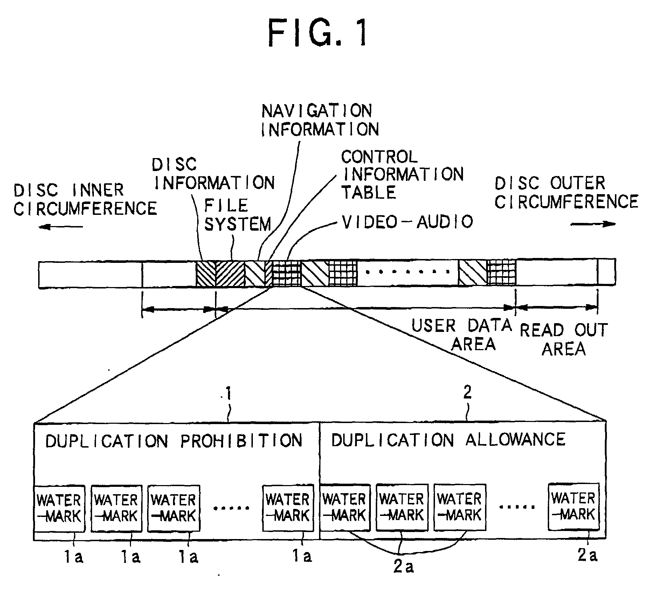

Description will now be directed to a duplication controlling method according to a first embodiment of the present invention with reference to FIGS. 1 to 7. It should be noted that in this embodiment, image contents are used as contents comprising digital information for example, but the present invention can be applied all the contents comprising digital information such as music.

FIG. 1 shows a data layout of an optical disc to which a duplication controlling method according to the present invention is applied.

An optical disc DK contains a plurality of contents as video/audio information. As shown in FIG. 1, an optical disc DK has user data area and a lead-out area. In the user data area, video/audio information and navigation information related to video/audio information are alternately recorded. Moreover, at a head of the user data area, there is provided an area for recording a file system indicating hierarchical structure of the navigation information. Furthermore, a lead-in area is provided immediately before the user data area for recording disc information.

In each of the video/audio information areas, watermarks 1a and 2a are recorded together with video data as the data of contents 1, 2 ... Watermarks 1a, 2a ... indicate duplication controlling information (control information) for that video data. The watermarks 1a, 2a ... are repeatedly embedded in the video data.

In the example of FIG. 1, contents 1 having control information for duplication prohibition is followed by contents 2 having control information for duplication allowance. In the contents 1, watermarks 1a indicating the control information (duplication prohibition) of the contents 1 are embedded while in the contents 2, watermarks 2a indicating the control information (duplication allowance) of the contents 2 are embedded.

Moreover, as shown in FIG. 1, an optical disc has a user data area and a lead-out area. The user data area has a navigation region and the contents region, between which is provided a region which contains a control information table, so that the table can be reproduced prior to the reproduction of the contents. The table is inserted as sub-information indicating switching positions (change positions of the control information) of all the contents recorded in the optical disc DK where the contents are switched from one to another and control information of the respective contents.

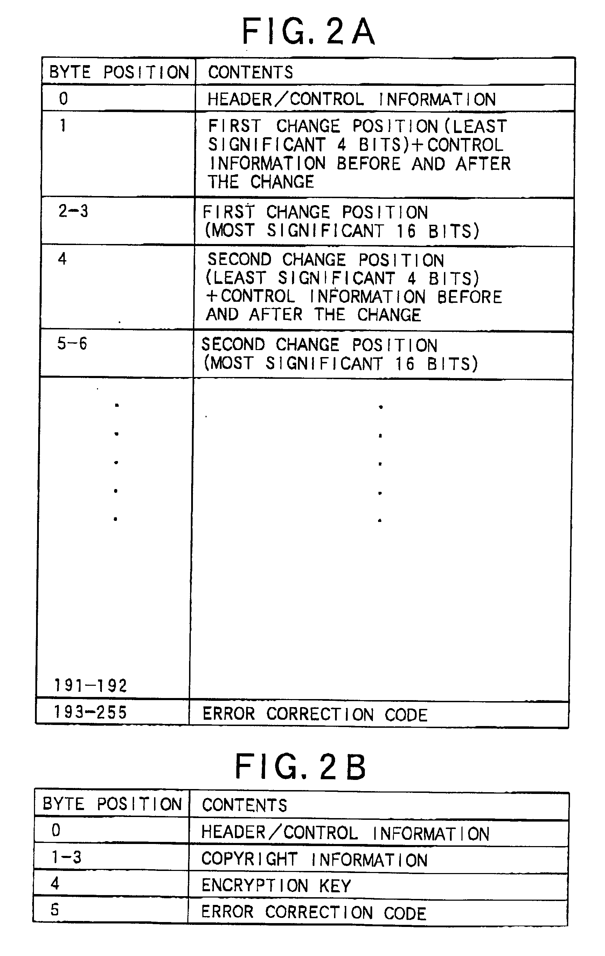

FIG. 2A shows an example of information stored in the control information table. The information has been encrypted when recorded-As will be detailed later, in this embodiment, information is encrypted so as to prevent the unauthorized alteration of the control information table.

In the example of FIG. 2A, the table shows what is successively recorded: a change position of the control information ("the first change position" in FIG. 2A) corresponding to switching from the current contents (the first contents) to the subsequent contents (the second contents) and the contents of the control information before and after the change position; a change position of the control information ("the second change position" in FIG. 2A) corresponding to switching from the second contents to the subsequent contents (the third contents) and the contents of the control information before and after the change position. It should be noted that FIG. 2A shows an example when the table is expressed by 256 bytes.

It should be noted that a change position of the control information is defined by an address.

Fig. 2B shows a format of information embedded as a watermark. In this example, information indicated by a watermark uses 8 bytes. One byte is embedded per one frame and 8 frames constitute one information item. These information items are embedded as watermarks in all the frames of the contents. As shown in FIG. 2B, in this example, 1 byte is used for header information and control information, 3 bytes are used for copyright information, 1 byte is used for an encryption key, and 3 bytes are used as an error correction code.

If the control table is altered, there arises a trouble that the contents which should not be duplicated (copied) can be duplicated. Accordingly, it is preferable that the control information table be encrypted before being recorded. In this case, an encryption key for decrypting the control information table is embedded as a watermark in the contents, thereby preventing the decryption and alteration of the control information table. In the present embodiment, as shown in FIG. 2B, an encryption key is included in the watermark, so that the encryption key is detected and used when decrypting information of the control information table.

Thus, in the present embodiment, control information of the contents are collected to be recorded into the control information table. Accordingly, during reproduction, reception, or recording of the contents, it is possible to previously recognize a timing to switch from the current contents to the subsequent contents and control information of the subsequent contents. This makes it possible to assure a correct operation according to the control information of the subsequent contents simultaneously with switching to the subsequent contents.

Moreover, in this embodiment, by reading the table, it is possible to recognize not only the table, a switching timing of the subsequent contents, and control information of adjacent contents but also other switching timings and control information of other contents. Accordingly, for example, even when first contents are switched to second contents not adjacent to the first contents before the first contents are complete, it is possible to fetch control information of the second contents while the first contents are being reproduced. Consequently, when switched to the second contents, it is possible to assure an appropriate processing and operation according to the control information set for the second contents.

It should be noted that as has been described above, for example, a change position of the control information can be defined by an address in the case of a package medium, but the present invention is not limited to the package media.

For example, when software is delivered by broadcasting, by periodically inserting a table such as the aforementioned table, a reception side can fetch the table information without fail. In this case, the table contains change positions of the control information for a predetermined range of the contents and control information before and after the changes.

Moreover, change positions of the control information can be defined by time stamps. In this case, by indicating a relative time stamp from the first change position in the table, it is possible to express the change position of the control information.

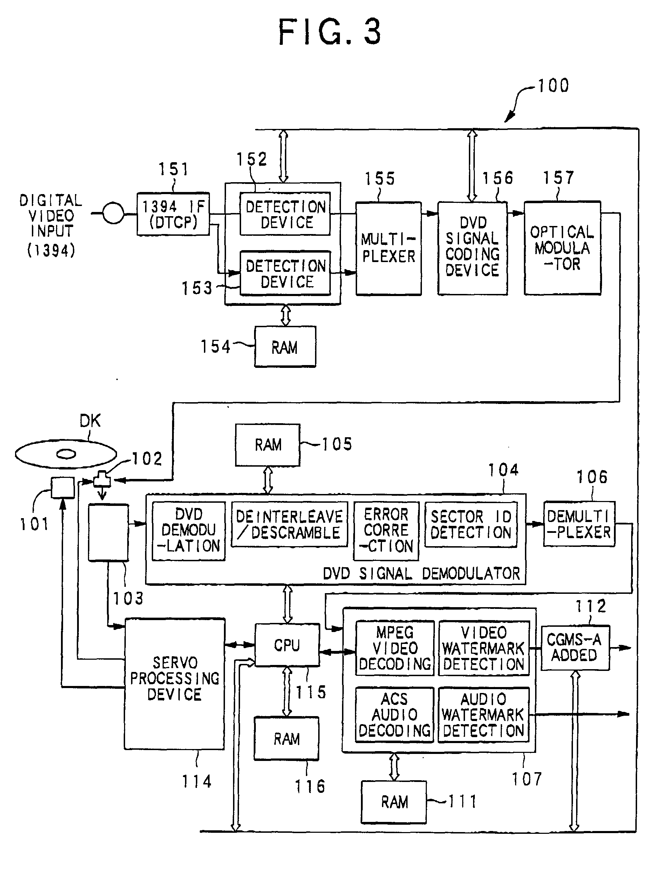

FIG. 3 is a block diagram showing configuration of an information recording/reproducing apparatus corresponding to the duplication controlling method of the present invention.

The information recording/reproducing apparatus 100, as a reproduction system, is provided with: a drive device 101 for an optical disc DK; an optical head 102 for recording/reproducing information; a head amplifier 103 for amplifying an output signal of the optical head 102; a DVD demodulator 104 for performing demodulation, deinterleaving, descrambling, error correction, sector ID detection according to a DVD format; an RAM 105 for storing upon occasion, necessary data for DVD signal demodulation; a demultiplexer 106 for receiving an output signal from the DVD signal demodulator 105; a watermark detection block 107 which receives an output signal from the demultiplexer 106 and performs MPEG decoding of a video signal and an audio signal and which detects a video watermark and an audio watermark; an RAM 111 for storing the watermark detected; a signal overlap block 112 for overlapping a micro vision signal of CGMS-A type on the analog video output signal from an MPEG video recorder 107; a servo processing device 114 for controlling optical head focusing, tracking, and rotation speed of the optical disc DK; a CPU 115 for controlling the respective components of the information recording/reproducing apparatus 100; and an RAM 116 for storing upon occasion, data necessary for control by the CPU 115.

Moreover, the information recording/reproducing apparatus 100, as a recording system, is provided with: an interface (1394 interface) 151 for receiving a digital video signal; a detection/update device 152 for detecting/updating a video watermark in a video output signal from the interface 151; a detection/update device 153 for detecting/updating an audio watermark in an audio output signal from the interface 151; an RAM 154 for storing watermark detected; a multiplexer 155 for multiplexing the video output signal and the audio output signal from the detection/update devices 152 and 153; a DVD signal coding device 156 for performing a code processing based on the DVD format; and an optical demodulator 157 for modulating an output signal from the DVD coding device 156 and outputting the demodulated signal to the optical head 102.

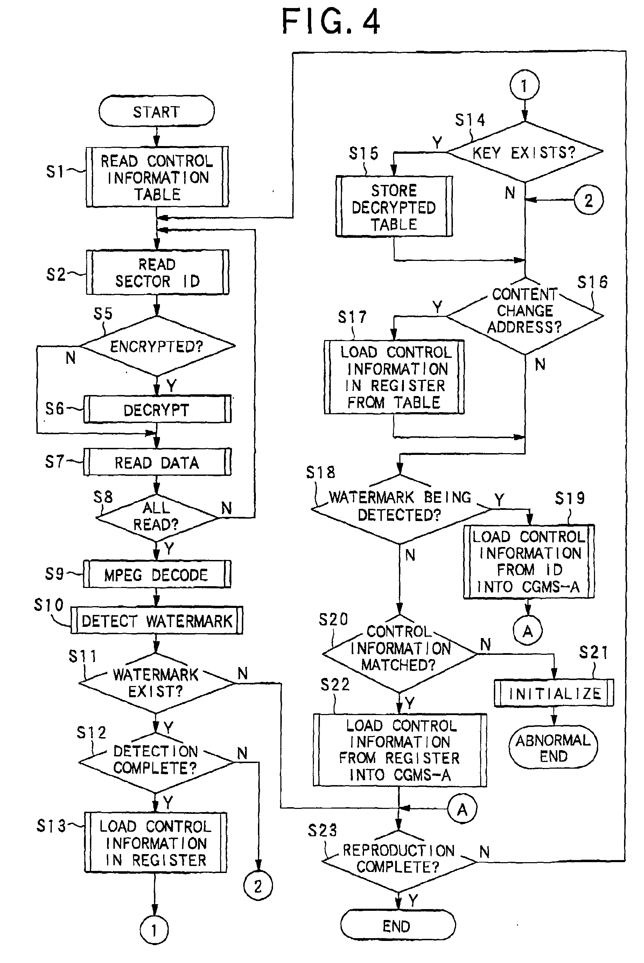

FIG. 4 is a flowchart showing an example of reproduction procedure in the information recording/reproducing apparatus 100. In the processing of FIG. 4, a control information table is recorded in a region which is reproduced prior to the reproduction of the contents.

In step S1 of FIG. 4, a control information table is read in prior to the reproduction of the contents. Subsequently, in step 2, processing for reproducing the contents is performed, and a sector ID is detected and loaded.

In step S5 it is determined whether data is encrypted. If encrypted, processing is passed to step S6, where decryption is executed, and control is passed to step S7. If in step S5 it is determined that the data is not encrypted, processing is passed to step S7.

In step S7, the data is read out, and in step S8 it is determined whether all the necessary data items (data of one sector) have been read out. If the result of the determination is affirmative, processing is passed to step S9, and if the result of the determination is negative, processing is passed back to step S1.

In step S9, MPEG decoding is executed, processing is passed to step S10, where a watermark detection is executed. Next, in step S11 it is determined whether a watermark has been detected (including a state that a watermark is being detected) in step S10. If the result of the determination is affirmative, processing is passed to step S12, and if the result of the determination is negative, then processing is passed to step S20.

In step S12 it is determined whether a watermark has been detected. If the result of the determination is affirmative, processing is passed to step S13, and if the result of the determination is negative, processing is passed to step S16. In step S13, the watermark detected is loaded in a register for watermarks (WM register) and processing is passed to step S14.

Next, in step S14 it is determined whether an encryption key is contained in the detected watermark. If the result of the determination is affirmative, processing is passed to step S15, and if the result of the determination is negative, then processing is passed to step S16.

In step S15, by using the encryption key detected from the watermark, the control information table is decrypted and stored.

Next, in step S16, according to the sector ID detection result in step S2, it is determined whether a change address where the contents which are being reproduced are changed (change position in the table) has been detected. If the result of the determination is affirmative, processing is passed to step S17, and if the result of the determination is negative, processing is passed to step S18.

In step S18 it is determined whether a watermark is being detected. If the result of the determination is affirmative, processing is passed to step S19, and if the result of the determination is negative, then processing is passed to step S20. In step S19, on the basis of control information in the sector ID, it is loaded in the signal overlap block 112 (FIG. 3) and processing is passed to step S22. Thus, after a reproduction start, the signal overlap block 112 is not set until a watermark is detected and there is no trouble that an analog video signal enters the duplication allowance.

In step S20 it is determined whether the control information stored in the WM register in step S13 or step S20 coincides (is matched) with the control information in the sector ID which has been read out and is being reproduced. If the result of the determination is affirmative, processing is passed to step S22, and if the result of the determination is negative, then control is passed to step S21. in step S21 a predetermined initialization process is executed, assuming that the control information in the ID has been altered.

In step S22, the signal overlap block 112 is set according to the control information stored in the WM register. Next, in step S23 it is determined whether the reproduction is complete. If the result of the determination is affirmative, the processing of FIG. 4 is terminated, and if the result of the determination is negative, then processing is passed back to step S2.

Thus, in the processing of FIG. 4, the table is read out (step S1) prior to the reproduction of the contents and when the encryption key is detected (step S14: Yes), the table is decrypted using the key and is stored (step S15). Accordingly, when the contents change address is detected (step S16: Yes), a subsequent control information to be reproduced can be fetched from the stored table and loaded in the WM register (step S17), thereby enabling to immediately control the signal overlap block 112. Consequently, without being affected by a watermark detection delay, it is always possible to add a correct micro vision signal to an analog video signal. Moreover, since the table is stored, even when some contents are skipped and the searched contents are reproduced, it is possible to fetch the control information of the contents simultaneously with the reproduction start. In this case also, it is always possible to add a correct micro vision signal to the analog video signal.

Moreover, the control information table has been encrypted when recorded and the table is decrypted by using the encryption key in the watermark. Accordingly, it is possible to prevent the unauthorized alteration of the control information table.

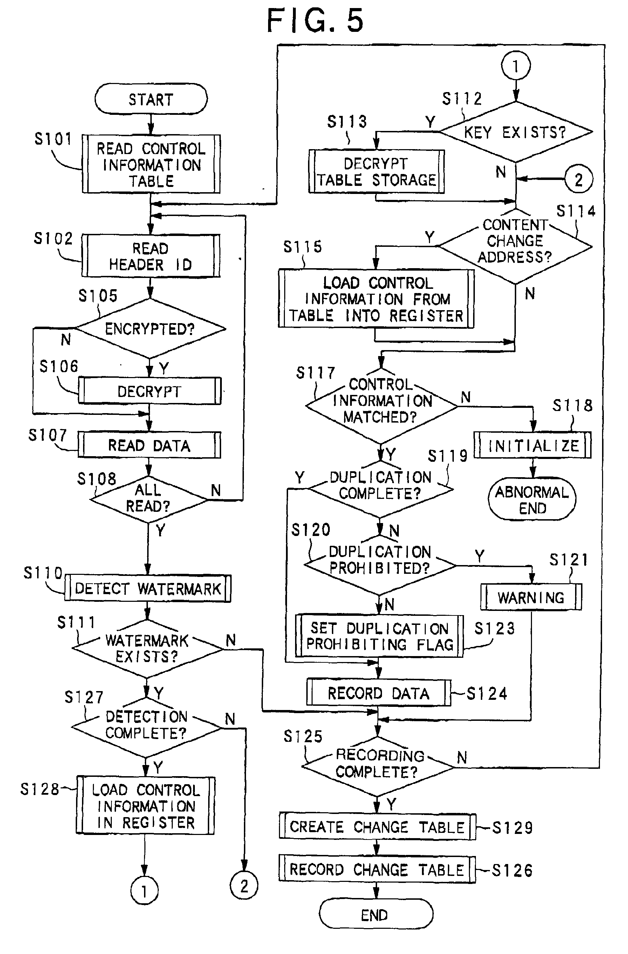

FIG. 5 is a flowchart showing an example of recording procedure in the information recording/reproducing apparatus 100.

In step S101 of FIG. 5, prior to reading the contents, the control information table is read in Next, in step S102 a header ID detection and loading are executed. In step 104 a change flag indicating that a change address has been detected is set and processing is passed to S105.

In step S105 it is determined whether the data is encrypted. If encrypted, processing is passed to step S106, where a decryption process is executed, and processing is passed to step S107. If in step S105 it is determined that the data is not encrypted, processing is passed to step S107.

In step S107, the data is read in and in step S108 it is determined whether all the necessary data items (data of one sector) have been read in. If the result of the determination is affirmative, processing is passed to S110, and if the result of the determination is negative, then processing is passed back to step S102.

Subsequently, in step S110 a watermark detection is executed. It should be noted that when the contents to be recorded have been subjected to MPEG data compression, MPEG decoding is executed prior to step S110. Next, in step S111 it is determined whether a watermark has been detected (including a state that a watermark is being detected) in step S110. If the result of the determination is affirmative, processing is passed to step S112, and if the result of the determination is negative, processing is passed back to step S102.

In step 127 it is determined whether a watermark has been detected. If the result of the determination is affirmative, processing is passed to step S127, and if the result of the determination is negative, then processing is passed to step S114. In step S128, control information in the watermark is loaded in the WM register and processing is passed to step S112.

Next, in step S112 it is determined whether the detected watermark contains an encryption key. If the result of the determination is affirmative, processing is passed to step S113, and if the result of the determination is negative, processing is passed to step S114.

In step S113, the control information table is decrypted by using the encryption key detected from the watermark and the decrypted table is stored before passing control to step S114.

Next, according to the sector ID detection result in step S2, in step S112 it is determined whether a change address (change position in the table) where the contents which are being reproduced are switched to another has been detected. If the result of the determination is affirmative, processing is passed to step S113, and if the result of the determination is negative, then processing is passed to step S114.

According to the control information table which has been read in step S1 and decrypted and stored in step S113, in step S115 control information corresponding to the contents to be recorded is loaded in the WM register, and processing is passed to step S116. It should be noted that various processes in the present apparatus are performed according to the control information loaded in step S115 or step S118.

In step S117 it is determined whether the control information stored in the WM register in step S115 or step S118 coincides with the sector ID control information which is being recorded. If the result of the determination is affirmative, processing is passed to step S119, and if the result of the determination is negative, processing is passed to step S118. In step S118 a predetermined initialization process is executed, assuming that the ID control information has been altered, thereby terminating the processing of FIG. 5.

In step S119 it is determined whether the contents to be recorded are in the duplication allowance according to the ID control information in the case that a watermark is being detected, or according to the control information in the WM register in the case that the watermark has been detected. If the result of the determination is affirmative, processing is passed to step S124, and if the result of the determination is negative, then processing is passed to step S120. In the same way as the determination based on the control information in step S119, in step S120 it is determined whether the contents to be recorded are in the duplication prohibition or the further-duplication prohibition (one-generation duplication is allowed but already has been duplicated once). If the resultf of the determination is affirmative, processing is passed to step S121, and if the result of the determination is negative, processing is passed to step S123. It should be noted that when the result of the determination in step S120 is negative, this means that the current recording is the first-generation recording. In step S121, warning display is executed and processing is passed to step S125.

In step S123 a flag indicating that further duplication is prohibited is set and control is passed to step S124.

In step S1124, contents data is recorded and processing is passed to step S125.

Next, in step S125 it is determined whether the reproduction has been completed. If the result of the determination is affirmative, the processing of FIG. 5 is terminated, and if the result of the determination is negative, processing is passed back to step S102.

In step S128 a new control information table (change table) is created. The new control information table includes change positions of the control information for all the contents recorded on the optical disc and control information changed at each change position. Then in step S126, the change table thus created is recorded in a region following the navigation information recording region (see FIG. 1), thereby terminating the processing of FIG. 5.

Thus , in the processing shown in FIG. 5, the control information table is read in (step S101) before recording the contents entered and when an encryption key embedded is detected (step S112: Yes), the table is decrypted using the key and stored (step S13). Accordingly, when a change address of the contents to be recorded is detected (step S114: Yes), a corresponding control information can be fetched from the stored table and loaded in the WM register (step S117), thereby enabling to immediately recognize the control information of the contents to be recorded (step S119, step S120). Consequently, without being affected by a watermark detection delay, it is possible to correctly record the contents of duplication allowance from its head.

Moreover, the control information table has been encrypted when recorded, so that the table is decrypted using the encryption key in the watermark. Thus, it is possible to prevent the unauthorized alteration of the control information table.

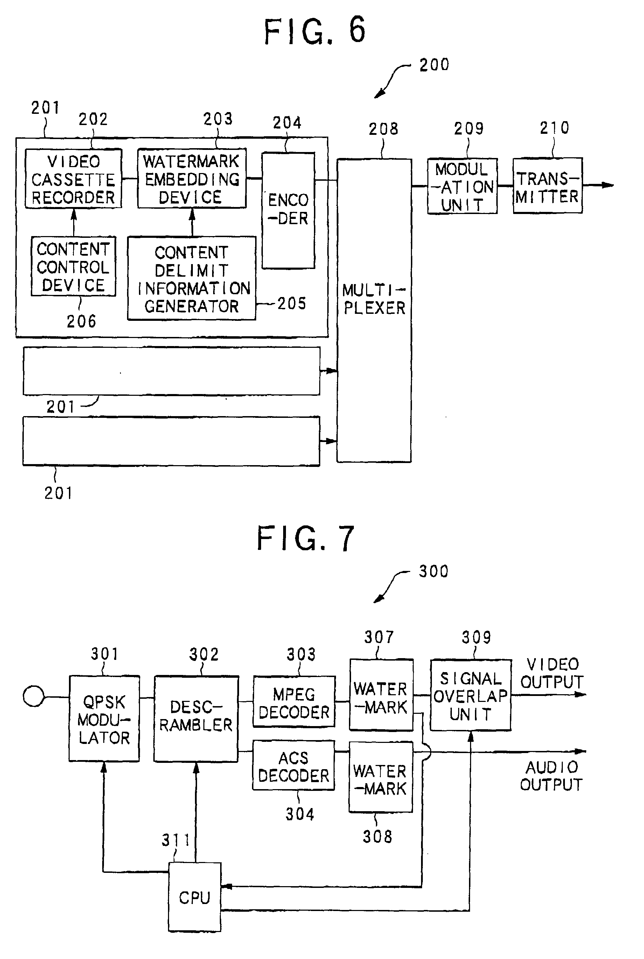

FIG. 6 is a block diagram showing a configuration example of a transmission apparatus of a broadcast station capable of embedding a watermark into the broadcast contents and adding the control information table thereto according to the duplication controlling method of the present invention.

The transmission apparatus 200 shown in FIG. 6 is provided with: a plurality of watermark embedding blocks 201; a multiplexer 208 for embedding a header and multiplexing an output signal from the watermark embedding block 201; a modulation block for modulating an output signal from the multiplexer 208 and, if necessary, scrambling an image; and a transmitter 210 for amplifying and outputting an output signal from the modulation block 209.

As shown in FIG. 6, the watermark embedding block 201 includes: a video cassette recorder 202 for reproducing a video tape having the recorded contents; a watermark embedding device 203 for embedding a watermark having an information format show in FIG. 2B output from an later-described control information table creator 205 into an output signal (image signal) from the video cassette recorder; an encoder 204 for executing data compression of a video signal and an audio signal of the contents output from the watermark embedding device 203, by the use of an MPEG system and an AC3 system, respectively, and for periodically entering, as sub-information, the control information table output from the later-described control information table creator 205; the control information table creator 205 for generating and encoding the control information table shown in FIG. 2A based on contents delivery information output from the later-described contents control device 206 to output the encoded table to the encoder 204, and for generating the control information shown in FIG. 2B to output the generated information to the watermark embedding device 203; and a contents control device 206 for controlling the video cassette recorder 202 and the control information generator 205.

FIG. 7 is a block diagram showing a configuration example of a reception apparatus for receiving the contents having a watermark embedded according to the duplication controlling method of the present invention.

The reception apparatus 300 shown in FIG. 7 is provided with: a demodulator 301 for demodulating a received signal which has been modulated by 4-phase modulation method; a descrambler 302 for removing a scramble from an output signal of the demodulator; an MPEG decoder 303 which is fed with an image signal from the descrambler 302; an AC3 decoder 304 fed with a voice signal from the descrambler 302; a header extracting block for extracting information such as a header ID or control information table from an output signal of the descrambler 302; a watermark detection block 307 for detecting a watermark in the MPEG-decoded image signal; a watermark detection block 308 for detecting a watermark in the AC3-decoded voice signal; a signal overlap block 309 for overlapping an output signal from the watermark detection block 307 with a copy control information (macro vision signal) of a CGMS-A method; and a CPU 311 for controlling the respective blocks of the reception apparatus 300.

It should be noted that the present invention is not limited to the aforementioned embodiments. For example, in the aforementioned embodiments, the control information table is recorded after the navigation region as shown in FIG. 1, but the table can also be recorded after a file system or between the contents. That is, the table recording position is not limited to a particular position. Moreover, in the aforementioned embodiments, the key for decrypting the control information table is placed in the watermark indicating the control information in the contents but may be embedded into another watermark.

Moreover, the control table itself may be recorded as a watermark in the disc. In this case, it is preferable that the watermark be embedded with a high intensity (for rapid detection) at a position which is always read in upon disc start (such as a menu screen for selecting a title #, a chapter #, and a caption language, or at the head of the first contents (title #1) which are firstly reproduced).

Furthermore, as shown in FIG. 2B, a watermark embedded into the contents includes control information of the contents but it can be omitted since control information is present in the ID also. In this case, the control information in the ID is plain information and it is easy to alter the control information. However, the alteration can easily be detected by comparing (FIG. 4: step S20) the information to the control information in the highly safe control information table.

According to the duplication controlling method of the present invention, by reading a table, it is possible to recognize in advance change positions of the control information and the contents of the control information which varies at each change position. Accordingly, this fact makes it possible to rapidly keep up with the control information change which occurs upon contents switching from one to another, thereby enabling the solution of the problem caused by a control information detection delay.

## Claims

1. A duplication controlling method for controlling duplication by embedding control information (1a, 2a) regarding duplication of contents (1, 2) comprising digital information into the contents, **characterized in that** the method comprises the processes of:
creating a table that contains a change position of the control information for a predetermined range of the contents and the contents of the control information which vary at each change position; and
adding the table to the contents.

2. The duplication controlling method according to claim 1,
wherein the process of adding the table periodically adds the table to the contents.

3. The duplication controlling method according to claim 1,
wherein the process of adding the table adds the table at a position to be reproduced prior to the reproduction of the contents.

4. The duplication controlling method according to any one of claims 1 to 3, further comprising the process of scrambling the table,
wherein the process of adding the table adds the scrambled table to the contents as sub-information of the contents, and
the method further comprises the process of embedding a scramble release key into the contents as an electronic watermark.

5. The duplication controlling method according to any one of claims 1 to 3, wherein the process of adding the table embeds the table in the contents as an electronic watermark.

6. A duplication controlling apparatus (200) for controlling duplication by embedding control information (1a, 2a) regarding duplication of contents (1, 2) comprising digital information into the contents, **characterized in that** the duplication controlling apparatus comprises:
a creating device (205) for creating a table that contains a change position of the control information for a predetermined range of the contents and the contents of the control information which vary at each change position; and
an adding device (204) for adding the table to the contents.

7. The duplication controlling apparatus (200) according to claim 6, wherein the adding device (204) periodically adds the table to the contents.

8. The duplication controlling apparatus (200) according to claim 6, wherein the adding device (204) adds the table at a position to be reproduced prior to the reproduction of the contents.

9. The duplication controlling apparatus (200) according to any one of claims 6 to 8, further comprising a scrambling device (209) for scrambling the table, wherein
the adding device (204) adds the scrambled table into the contents as sub-information of the contents, and
the apparatus (200) further comprises an embedding device (203) that embeds a scramble release key into the contents as an electronic watermark.

10. The duplication controlling apparatus (200) according to claim 6, wherein the adding device embeds the table into the contents as an electronic watermark.

11. A recording medium (DK) in which control information (1a, 2a) regarding the duplication of contents (1, 2) comprising digital information is recorded, **characterized in that**
there is recorded a table containing a change position of the control information for a predetermined range of the contents and the contents of the control information which vary at each change position.

12. The recording medium (DK) according to claim 11, wherein the table is periodically recorded into the contents.

13. The recording medium (DK) according to claim 11, wherein the table is recorded at a position to be reproduced prior to the reproduction of the contents.

14. The recording medium (DK) according to any one of claims 11 to 13, wherein the table is scrambled and recorded as sub-information of the contents, and
a scramble release key is embedded as an electronic watermark into the contents.

15. The recording medium (DK) according to any one of claims 11 to 13, wherein the table is embedded as an electronic watermark.

16. A duplication controlling apparatus (100, 300) which controls duplication in accordance with control information (1a, 2a) embedded in contents (1, 2), the control information regarding duplication of the contents comprising digital information, **characterized in that** the duplication controlling apparatus comprises:
a table reading device for reading a table containing a change position of the control information for a predetermined range of the contents and the contents of the control information which changes at each change position;
a change position detecting device (115, 311) for detecting the change position of the control information; and
a control device (115, 311) for modifying processing of the duplication controlling apparatus in accordance with information read from the table by the table reading device when the change position is detected by the change position detecting device.

17. The duplication controlling apparatus (100, 300) according to claim 16, wherein the table reading device reads the table which has periodically been recorded in the contents.

18. The duplication controlling apparatus (100, 300) according to claim 16, wherein the table reading device reads the table prior to the reproduction of the contents.

19. The duplication controlling apparatus (100, 300) according to any one of claims 16 to 18, wherein the table reading device reads a table which has been scrambled and recorded as sub-information of the contents, and
the duplication controlling apparatus further comprises:
an electronic watermark reading device (107, 308) which reads a release key for releasing scramble of the table inserted in the contents; and
a scramble release device (104, 302) for releasing the scramble of the table which has been read by the table reading device in accordance with the release key which has been read by the electronic watermark reading device.

20. The duplication controlling apparatus (100, 300) according to any one of claims 16 to 19, further comprising:
a reproduction device (107, 303, 304) for reproducing the contents; and
a signal overlap device (112, 309) for overlapping a duplication control signal over an analog reproduction signal which has been output from the reproduction device,
wherein the control device (115, 311) controls the operation of the signal overlap device.

21. The duplication controlling apparatus (100) according to any one of claims 16 to 19, further comprising a recording device (102, 157) for recording the contents,
wherein the control device (115) controls a recording operation of the recording device.

22. The duplication controlling apparatus (300) according to any one of claims 16 to 19, further comprising:
a reception device for receiving the contents, and
a signal overlap device (309) for overlapping a copy control signal over an analog reproduction signal which has been output from the reception device,
wherein the control device (311) controls the operation of the signal overlap device.

23. A program embodied on computer-readable medium for embedding control information regarding duplication of contents comprising digital information into the contents, and recording the control information in a recording medium, **characterized in that** the program causes a computer to function as:
a creating device for creating a table containing a change position of the control information to the contents recorded in the recording medium and the contents of the control information which vary at each change position;
an adding device for adding the table into the contents; and
a recording device for recording the table and the contents into the recording medium.

24. The program embodied on computer-readable medium according to claim 23, wherein the recording device records the table at a position which is reproduced prior to the reproduction of the contents.

25. The program embodied on computer-readable medium according to claim 23 or 24, wherein the program further causing a computer to function as:
a scrambling device for scrambling the table to be recorded in the recording medium,
an adding device adds the scrambled table into the contents as sub-information of the contents, and
an embedding device embeds a scramble release key as an electronic watermark in the contents.
